Europäisches Patentamt

European Patent Office

Office européen des brevets

(11) Veröffentlichungsnummer: **0 041 641**
**B1**

(12) # EUROPÄISCHE PATENTSCHRIFT

(45) Veröffentlichungstag der Patentschrift:
29.05.85

(51) Int. Cl.⁴: **A 23 P 1/00**, A 23 J 3/00,
**B 30 B 11/24**

(21) Anmeldenummer: **81104001.3**

(22) Anmeldetag: **25.05.81**

(54) **Verfahren und Doppelschneckenextruder zur Verarbeitung von trockenen, pulver- bzw. mehlförmigen Substanzen zu Lebens- und Futtermittel in verzehrgerechter Form.**

(30) Priorität: **10.06.80 DE 3021739**

(43) Veröffentlichungstag der Anmeldung:
**16.12.81 Patentblatt 81/50**

(45) Bekanntmachung des Hinweises auf die Patenterteilung:
**29.05.85 Patentblatt 85/22**

(84) Benannte Vertragsstaaten:
**AT CH DE FR GB IT LI NL**

(56) Entgegenhaltungen:
**FR - A - 2 233 946**
**FR - A - 2 256 728**
**FR - A - 2 401 615**
**NL - A - 7 611 978**
**US - A - 4 185 123**

**REVUE FRANCAISE DES CORPS GRAS, Band 23, Nr. 2, 1976, Seiten 68-73, J.F. DE LA GUERIVIERE: "Texturation de proteines vegetales par cuisson-extrusion"**

(73) Patentinhaber: **TEXTRUDER ENGINEERING AG, Grienbachstrasse 17, Zug (CH)**

(72) Erfinder: **Ell, Arno, Dipl.-Ing, Hofackerstrasse 4, D-7450 Hechingen-Sickingen 5 (DE)**

(74) Vertreter: **Meyer-Roxlau, Reiner Ferdinand, Dipl.-Ing. et al, Patentanwälte Dr. Franz Lederer Dipl.-Ing. Reiner F. Meyer-Roxlau Lucile-Grahn-Strasse 22, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft zum einen ein Verfahren und zum anderen einen Doppelschneckenextruder zur Durchführung dieses Verfahrens und zwar zur Verarbeitung von trockenen, stärke-, protein-, zucker- und fetthaltigen Substanzen in Pulver- bzw. Mehlform zu Lebens-und Futtermitteln in verzehrgerechter Form gemäß Oberbegriff der Patentansprüche 1 bzw. 6.

Bekanntlich ist es möglich, Lebens- und Futtermittel, d. h. Stärke, Protein, Zucker, Fett und Cellulose enthaltende Rohstoffe, in geeigneten Ein- und Mehrschneckenextrudern kontinuierlich zu extrudieren und zu expandieren. Dabei wird mittels Druck und Wärme ein Aufschmelzen, Kochen, Verkleistern oder Texturieren erreicht, und zwar je nach Aufgabenstellung, Rezeptur und Maschinenart und Einstellung. In der Praxis werden nach diesem Verfahren also expandierte Snacks, biskuit- oder knäckebrot-ähnliche Produkte, texturiertes Sojaprotein, wärmebehandelte und somit besser verdauliche Futtermittel usw. erzeugt.

Die meisten der dabei benötigten Rohstoffe werden, falls sie griffigen Charakter haben wie Maisgrieß, auf hochtourigen Einschneckenextrudern und, falls sie mehlartigen oder wenig griffen Charakter haben,auf ebenfalls hochtourigen, jedoch gleichsinnig laufenden Doppelschneckenextrudern verarbeitet.

Die bereits erwähnte Verwendung von Doppelschneckenextrudern für die Herstellung von Lebensmitteln ist beispielsweise bekannt aus FR-A-2 401 615 und FR-A-2 233 946. In beiden Fällen wird jedoch von schnell laufenden und gleichsinnig drehenden Doppelschnecken Gebrauch gemacht, also von einem System, auf dessen besondere Eigenheiten weiter unten noch näher eingegangen wird.

Grundsätzlich können Doppelschneckenextruder gegensinnig oder gleichsinnig laufende Schnecken aufweisen. Die Arbeitsweise beider Systeme weist jedoch große Unterschiede auf. Gleichsinnig laufende und ineinander kämmende Doppelschnecken einschließlich derjenigen der beiden genannten FR-A besitzen aufgrund ihrer Schneckengeometrie kein in sich abgeschlossenes Schneckenkammersystem, d. h. eine Schnecke wälzt das in ihren Kammern liegende Material jeweils auf die schräg nach vorn in Extrusionsrichtung gegenüberliegende Kammer ab. Solche Schnecken müssen daher sehr hochtourig laufen, um einen genügend hohen Druckaufbau beim Expandieren und einen hohen Ausstoß zu erreichen.

Aufgrund dieses nicht-selbstabdichtenden Schneckenkammersystems lassen sich zwar durch die hohe Schneckendrehzahl bedingt hohe Ausstoßleistungen mit guten Misch- und Schereffekten erreichen; es ist aber sehr schwierig, beim Schneiden an der Düse exakt reproduzierbare Gebilde, d. h. solche mit konstanter Geometrie und gleichmäßigen Profilen, zu erhalten. Diese Tatsache hat z. B. auch dazu geführt, daß alle Doppelschneckenextruder zur Herstellung von Profilen und oder Rohren aus Kunststoff heute gegensinnig laufende Schnekken aufweisen, während für große Compounder und Granulieranlagen höchster Leistung ausschließlich Doppelschneckenextruder mit gleichsinnig laufenden Schnecken angeboten werden, da hier nur die Höhe des Ausstoßes von Interesse ist und gewisse Schwankungen im Ausstoß nicht ins Gewicht fallen.

Zur Herstellung von extrudierten Artikeln mit gleichmäßiger Geometrie, z. B. zur Herstellung von extrudierten Keksen, Knäckebrot etc., bieten sich deshalb Doppelschneckenextruder mit ineinander kämmenden, gegensinnig laufenden Schnecken an. Bei diesen Maschinen muß das zwangsweise geförderte Gut jeder Schneckenkammer bei jeder Umdrehung durch den Walzenspalt, den die Schneckenschäfte zwischen einander bilden, hindurch. Beim Hindurchpressen des geförderten Rohstoffes durch den Walzenspalt bildet sich ein Materialzwickel, der die Schneckenkammern nach hinten abdichtet, so daß keine Möglichkeit besteht, daß Dampf oder andere flüchtige oder auch feste Bestandteile nach hinten entweichen können. Durch dieses sich bei jeder Schneckenumdrehung selbstabdichtende Schneckenfördersystem wird eine sehr gleichmäßige Förderung und ein konstanter Ausstoß erreicht.

Parallele Doppelschnecken dieser Art, wie sie aus der Kunststoffindustrie bekannt sind, haben sich jedoch für die Extrusion von Lebens- und Futtermitteln nicht bewährt, z. T. aus den nachfolgend angegebenen Gründen.

Bei diesen Maschinen, bei denen die Schnekken über die Kräfte im Walzenspalt nach außen an die Zylinderwand gedrückt werden, ergibt sich ein zu großer Verschleiß, der auch nicht, wie bei der Verarbeitung von Kunststoffen, durch reduzierte Drehzahlen kompensiert werden kann. Aus diesem Grunde werden für allgemeine Lebens- und Futtermittelanwendungen bisher nur Doppelschneckenextruder mit langsam und gegensinnig laufenden konischen Schnecken angeboten. Diese Konstruktion mit relativ kurzen Schnecken ermöglicht nicht nur eine solide, hohe Rückdrücke auffangende Lagerung, sondern führt auch zu einer erhöhten Biegesteifigkeit der Schnecken und, infolge der geringeren Durchmesser am Austrittsende, zu reduzierten Umfangsgeschwindigkeit und damit erheblich verringerten Verschleißwerten.

Da andererseits jedoch generell die erfolgreiche Textudierung und Expansion von Mehl und anderen Stoffen eine Frage der Scherung ist, der das Gut im Extruder unterworfen werden muß, d. h. einer damit verbundenen Temperaturerhöhung und intermolekularen Feuchtigkeitsverteilung, muß bei langsam und gegensinnig laufenden Doppelschnecken ein besonders hoher Druck vor der Düse aufgebaut werden, der wiederum hohe Drehmomente verlangt, um die not- wendige Scherenregie in das Gut einbringen zu können. Hohe Drehmomente bedingen jedoch schwere Antriebsaggregate und entsprechend stark dimensionierte und daher teuere Schnecken großer Durchmesser, teuere Lagerungen etc.

Der Erfindung liegt daher die Aufgabe zugrunde, die Vorteile eines Doppelschneckenextruders mit gegensinnig und langsam laufenden Schnecken mit seiner selbstabdichtenden und vom Füllungsgrad nahezu unabhängigen und konstanten Fördercharakteristik einerseits mit einer hohen Scher- und Mischwirkung andererseits zu verbinden, ohne daß übergroße verschleißträchtige Drücke zum Einsatz kommen müssen.

Diese Aufgabe wird erfindungsgemäß in verfahrenstechnischer bzw. vorrichtungstechnischer Hinsicht durch die im Kennzeichenteil der Ansprüche 1 bzw. 6 angegebenen Maßnahmen gelöst.

Durch die Zwischenschaltung einer Misch- und Scherzone bzw. eines solchen Kopfes zwischen dem Ausgang des eigentlichen Extruders und der formgebenden Düse wird eine Reihe von wichtigen, mechanischen und verfahrenstechnischen Vorteilen erreicht, wie die folgenden Ausführungen zeigen werden.

Das gute Einzugsvermögen und die konstante Förderung der gegenläufigen Doppelschnecken wird sozusagen als Vorplastifizierung zur Einspeisung der separaten Misch- und Scherzone bzw. dieses Kopfes benutzt, der einfach aufgebaut sein kann und aus meist kurzen und billig herzustellenden Teilen besteht, so daß die eigentliche Verschleißbarkeit aus dem teueren Doppelschneckenextruder herausgenommen und auf die preiswerteren Teile verlagert wird. Der Doppelschneckenextruder kann mit sehr viel geringeren Drücken arbeiten; er wird also in seiner Herstellbarkeit preiswerter. Er leistet nur noch reine, konstante Förderarbeit verbunden mit einer absoluten Abdichtung des Systems gegen Entweichen von Dampf nach hinten und kann gezielt für eine schonende Aufheizung der Rohstoffe dimensioniert werden.

Ergänzend zu den im Kennzeichenteil des Patentanspruchs 1 angegebenen Parametern zur Durchführung des Verfahrens ist auf folgendes hinzuweisen. Die Feuchtigkeit des Verarbeitungsguts ist von höchster Bedeutung, und bereits geringe Schwankungen innerhalb der angegebenen Bandbreite der Feuchtigkeit führen zu in der Textur veränderten Produkten. Eine Über- bzw. Unterschreitung der angegebenen Bandbreite der Feuchtigkeit führt sogar zumindest in der Regel zu einer Unausführbarkeit des Verfahrens. Die letzte Aussage gilt selbstverständlich auch für den Fall einer Über- bzw. Unterschreitung der Bandbreite für die Einspeistemperatur, die Temperaturerhöhung im Doppelschneckenextruder, den Druck in der Misch- bzw. Scherzone, die dortige Temperaturerhöhung und die Verweilzeit im Doppelschneckenextruder und der Misch- und Scherzone.

Verfahrenstechnisch ergeben sich weitere Vorteile. So kann beispielsweise für eine Knäkkebrotproduktion durch Erhöhung der Schnekkendrehzahl bei reduziertem Rückdruck die Verweilzeit im Doppelschneckenextruder, die normalerweise zwischen 20 und 60 Sekunden schwankt, um ca. 20 bis 50% reduziert werden, da in der Scher- und Mischzone durch die dortige intensive Scherarbeit zusätzlich Wärme in das Gut gebracht wird. Die Verweilzeit in der Mischzone selbst ist jedoch sehr kurz, so daß insgesamt eine geringere Verweilzeit und damit eine geringere thermische Belastung und Schädigung biologisch wertvoller Bestandteile stattfindet. Die Trennung von Aufheizung und Scherarbeit erhöht darüber hinaus die Flexibilität und den Bereich der Anwendbarkeit der Anlage, da die Teile des Scher- und Mischkopfes leicht und billig austauschbar gestaltet werden können, während eine Änderung der Geometrie einer Doppelschnecke eine sehr kostspielige Investition darstellt. Bei einer solchen Änderung ist auch kein gesichertes Ergebnis voraussagbar, da die Geometrie von Doppelschnecken nach empirisch erworbenen Überlegungen ausgelegt werden muß. Die Einarbeitung von Aromen, die sehr temperaturempfindlich sind, was im übrigen auch für Vitamine und andere empfindliche Zusatzstoffe gilt, kann separat direkt in die Scher- und Mischzone erfolgen, so daß durch die homogenisierende Wirkung dieses Aggregats nicht nur eine optimale Verteilung, sondern auch ein sehr geringer thermischer Abbau erreicht wird. Die Einarbeitung oder überhaupt das Aufschmelzen von Massen mit hohen Zuckergehalten war bisher schwierig und führte zu frühzeitiger Karamelisierung. Jetzt kann der Doppelschneckenextruder die Förderung und einen Teil der Aufheizbarkeit übernehmen, während der Scher- und Mischkopf die eigentliche Aufschmelz- und Homogenisierungsarbeit übernimmt. Karamelbonbons und andere Zuckerwaren, auch geschäumte Artikel, lassen sich jetzt einwandfrei herstellen, da alle notwendigen Parameter separat einstellbar oder mit einfachen Mitteln konstruktiv erreicht werden können.

Die Leistung eines gegensinnig laufenden Doppelschneckenextruders war bisher durch die sich bei Erhöhung der Schneckendrehzahl einstellenden hohen Rückdrücke sehr begrenzt. Dadurch, daß die eigentliche Scherarbeit nunmehr außerhalb des eigentlichen Extruders ausgeführt wird, kann die reine Förderleistung des Doppelschneckenextruders verdoppelt und verdreifacht werden, wobei die Maschine in vielen Bereichen mit stark reduzierten Drücken betrieben werden kann. Insgesamt gesehen verbilligen sich also die Investitionskosten für die Maschine je kg Fertigprodukt sehr erheblich.

In Sonderbereichen, wie beispielsweise der Texturierung von Soja und Milcheiweiß, die bisher nur auf schnellaufenden und starkem Verschleiß ausgesetzten Einschnecken-Anlagen und Doppelschnecken-Anlagen mit gleichsinnig laufenden Schnecken hergestellt werden konnten, lassen sich jetzt überraschende Resultate erzielen in Hinblick auf die Leistungssteigerung je Einheit der insgesamt verbrauchten Energie, und zwar insbesondere auch dadurch, daß »härtere« Mischungen verarbeitbar sind, d. h. Mischungen mit weniger zugesetzter Feuchtigkeit, so daß kein oder nur ein geringes Nachtrocknen der extrudierten Produkte notwendig ist.

Vorteilhafte Weiterbildungen sowohl in verfahrenstechnischer als auch in vorrichtungstechnischer Hinsicht sind aus den Unteransprüchen 2 bis 5 bzw. 7 bis 12 zu ersehen. Zu der angegebenen Umfangsgeschwindigkeit von 0,2 m/s ist beispielsweise anzugeben, daß diese einer Drehzahl der Doppelschnecken von 40 Upm bei Schnecken mit 100 mm Durchmesser entspricht. Im folgenden wird die Erfindung unter Bezugnahme auf die Zeichnungen, die besondere Ausführungsbeispiele darstellen, weiter ins einzelne gehend erläutert; im einzelnen zeigt:

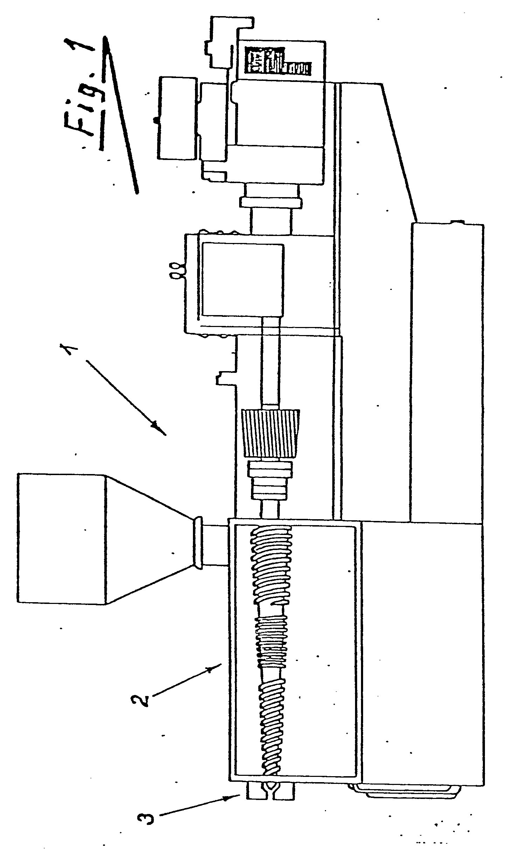

Fig. 1 eine schematische Seitenansicht eines Doppelschneckenextruders, und zwar unter »offener« Darstellung der Doppelschnecke und der Formgebungsdüse,

Fig. 2 einen Längsschnitt durch den Schnekkenteil, die Formgebungsdüse und den zwischen beiden angeordneten Misch- und Scherkopf, und zwar in der durch die Achsen der beiden Schnecken bestimmten Ebene,

Fig. 3 einen Längsschnitt durch ein anderes Ausführungsbeispiel des Misch- und Scherkopfs,

Fig. 4 einen Längsschnitt durch ein weiteres Ausführungsbeispiel des Misch- und Scherkopfs,

Fig. 5 einen Längsschnitt durch ein noch anderes Ausführungsbeispiel des Misch- und Scherkopfs,

Fig. 6 eine auseinandergezogene perspektivische Darstellung der Bestandteile eines weiteren Ausführungsbeispiels des Misch- und Scherkopfs ohne Gehäuse dargestellt und

Fig. 7 einen Längsschnitt durch ein letztes Ausführungsbeispiel des Misch- und Scherkopfs unter gleichzeitiger Darstellung der zugehörigen Lagerungs-, -versorgungs- und Antriebseinrichtung.

Der durch die Erfindung betroffene Teil des Doppelschneckenextruders 1 ist der von der Doppelschneckeneinheit 2 und der Formgebungsdüse 3 gebildete Teil. Die übrigen durch die Erfindung nicht betroffenen Teile des Doppelschneckenextruders 1 sind, insbesondere da hinlänglich bekannt, nicht näher erläutert.

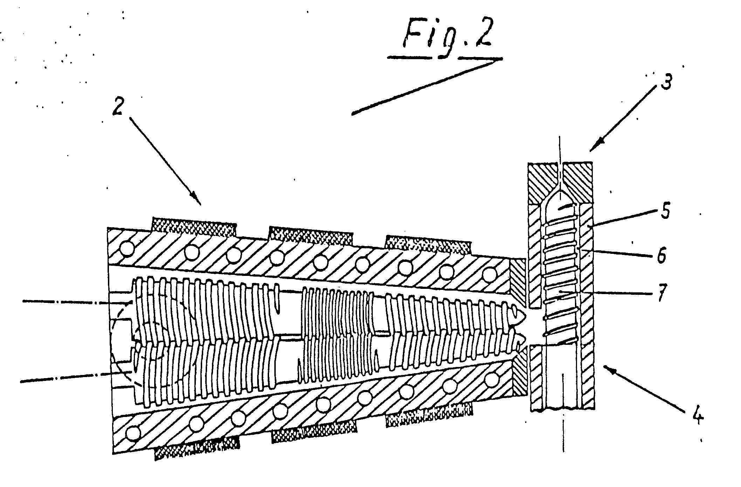

Zwischen der Schneckeneinheit 2 und der Formgebungsdüse 3 ist ein Misch- und Scherkopf 4 angeordnet, der in einfacher Weise an das auslaßseitige Ende der Schneckeneinheit 2 und damit des eigentlichen Extruders angeflanscht sein kann. Der Misch- und Scherkopf besteht aus einem als Stator zu bezeichnenden Gehäuse 5 und aus einer in dessen innerer Kammer 6 angeordneten und als Rotor zu bezeichnenden Schnecke 7. Für das als Stator 5 bezeichnete Gehäuse und die als Rotor 7 bezeichnete Schnecke, also für die Einzelteile des Misch- und Scherkopfs 4, kommen neben der besonderen beispielsweisen Gestaltung gemäß Fig. 2 vielfältige andere Gestaltungsformen in Frage, wie diese zum Teil in den weiteren Figuren dargestellt sind.

Der Stator 5 und der Rotor 7 bilden gemeinsam eine Misch- und Scherzone, durch die das aus der Doppelschneckeneinheit 2 austretende Verarbeitungsgut auf seinem Weg zur Formgebungsdüse 3 hinduchgeführt werden muß. Da die Kammer 6 des Statorgehäuses 5 weitgehend durch die Rotorschnecke 7 ausgefüllt ist, muß das Extrudat durch den verbleibenden engen Spalt zwischen Innenwand des Statorgehäuses 5 und äußerem Umfang des Schneckenrotors 7 hindurchgeführt werden, was mit einer intensiven Scherung verbunden ist, die hauptsächlich eine Funktion der Leistung des nicht dargestellten Motors für die Schnecke 7, der Umfangsgeschwindigkeit des Schneckenrotors 7, der Spaltweite und der Spaltlänge ist.

Bei diesem Ausführungsbeispiel kann der Schneckenrotor 7 einen oder mehrere, auch sich überlappende Schneckengänge aufweisen. Er kann in beiden Fällen zusätzliche Scherelemente, wie beispielsweise eingeschraubte Stifte usw., aufweisen, wobei auch im Statorgehäuse 5 Bohrungen vorgesehen werden können, in die sogenannte Scherstifte einschraubbar sind.

Wesentlich für die im Misch- und Scherkopf 4 angestrebte Misch- und Scherwirkung ist zum einen also die Ausbildung eines engen Spalts über einer gewissen Länge und die rotierende oder alternativ oszillierende Bewegung des gemäß Fig. 2 als Schnecke 7 gestalteten Rotors gegenüber dem als Schneckengehäuse 5 gestalteten Stator.

Insbesondere zur Unterstützung der angestrebten Scherwirkung als auch im Hinblick auf anderweitige Aspekte der Verarbeitung des Extrudats können die Bestandteile des Misch- und Scherkopfs 4 zur Erzielung optimaler Betriebsbedingungen heiz- oder kühlbar sein. Unter demselben Aspekt kann der nicht dargestellte Antrieb des Misch- und Scherkopfs 4 ein in seiner Drehzahl regelbarer Antrieb sein.

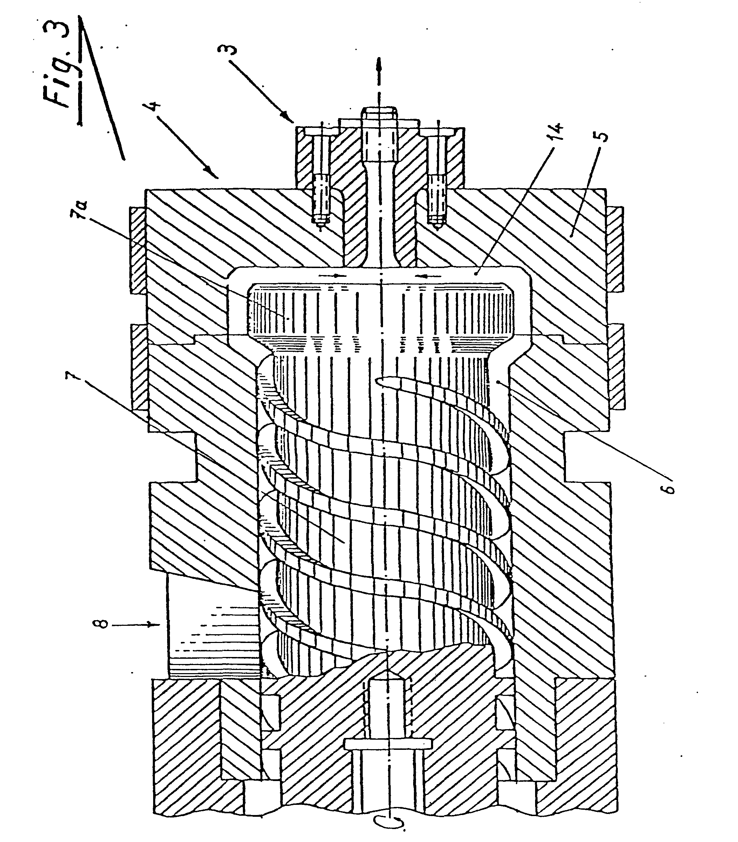

Bei dem in Fig. 3 dargestellten Ausführungsbeispiel des Misch- und Scherkopfs 4, der in Richtung des Pfeils 8 mit dem von der dort nicht dargestellten Schneckeneinheit 2 kommenden Extrudat versorgt wird, endet der wiederum als Schnecke 7 ausgebildete Rotor in alternativer Ausbildung zum Ausführungsbeispiel der Fig. 2 in einem scheibenförmig gestalteten Endteil 7a unter Belassung eines engen Abstands zur Stirnwand der Kammer 6 des Statorgehäuses 5. Dabei entspricht der genannte Abstand in seiner lichten Weite im wesentlichen dem Abstand zwischen der Innenwand des Statorgehäuses 5 und der äußeren Oberfläche der Rotorschnecke 7, so daß der genannte Abstand mitbestimmend für die Länge des Scherspalts ist, wodurch eine besonders kurze Baulänge erreicht wird. Selbstverständlich ist auch bei diesem Ausführungsbei-

spiel die Rotorschnecke 7 über nicht dargestellte, links in der Darstellung der Fig. 3 gelegene Antriebsmittel in der Kammer 6 des Statorgehäuses 5 in Umdrehung versetzbar.

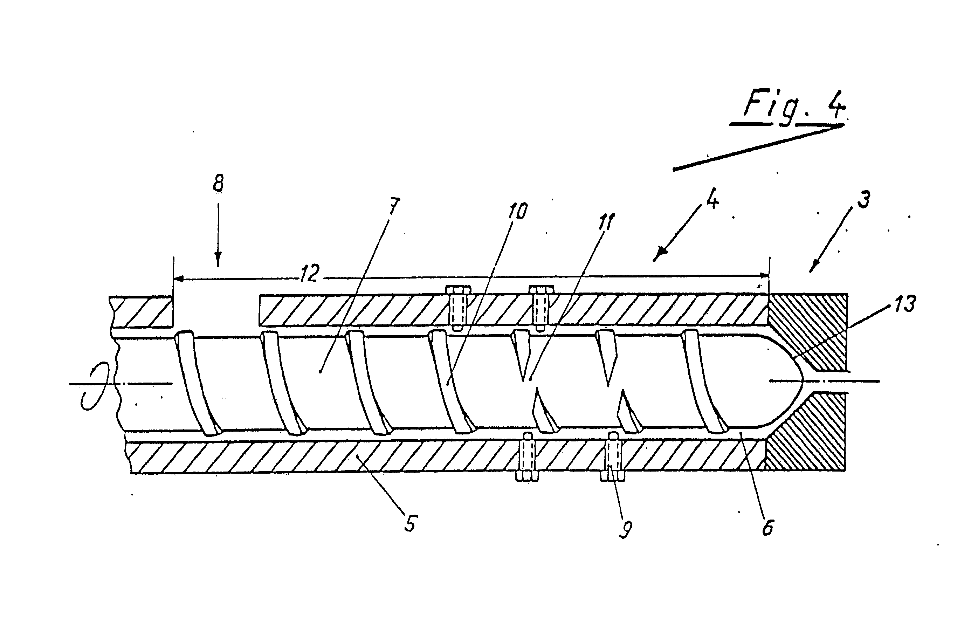

Fig. 4 zeigt eine weitere Ausführungsform des Misch- und Scherkopfs, die weitgehend der Darstellung gemäß Fig. 2 entspricht, d. h. der Misch- und Scherkopf 4 besteht wiederum aus einer Rotorschnecke 7 innerhalb der Kammer 6 eines Statorgehäuses 5, hier wieder mit einem abgerundeten Ende der Schnecke 7 entsprechend der Darstellung in Fig. 2 mit Zuführungsmöglichkeit für das Extrudat in Richtung des Pfeils 8 bei gleichzeitiger Anordnung von Scherstiften 9, die von außen durch das Statorgehäuse 5 bis in das Innere der Kammer 6 vorspringend eingeschraubt sind, wobei die Schneckenlänge 10 Unterbrechungen 11 aufweisen, durch die hindurch die in die Kammer 7 hineinragenden Enden der Scherstifte 9 bei Rotation der Rotorschnecke 7 hindurchführbar sind.

Wie ohne weiteres erkennbar ist, ist in diesem Fall die Spaltlänge durch die eigentliche Länge 12 der Rotorschnecke 7 und durch die Länge des mit 13 bezeichneten Bogens entlang des abgerundeten Endes der Rotorschnecke 7 bestimmt.

Das Äquivalent zur Länge des Bogens 13 des Ausführungsbeispiels der Fig. 4 ist beim Ausführungsbeispiel der Fig. 3 die Länge des in Fig. 3 mit 14 bezeichneten Radius des scheibenförmigen Endteils 7a der dortigen Rotorschnecke 7.

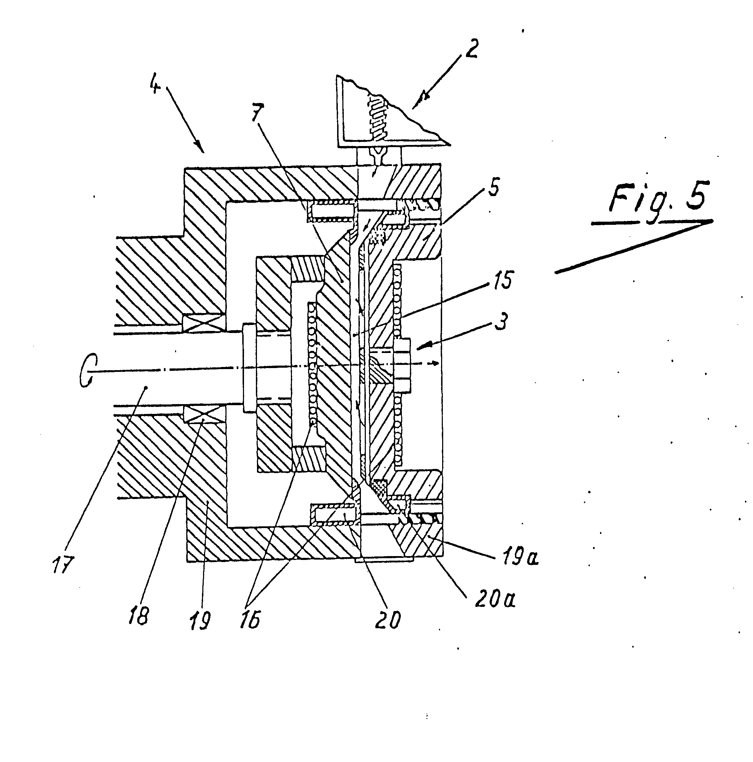

Beim Ausführungsbeispiel der Fig. 5 besteht der Misch- und Scherkopf 4 im wesentlichen aus zwei einander gegenüberliegenden Scheiben, nämlich der stationär angeordneten Statorscheibe 5 und einer gegenüber dieser in Rotation versetzbaren Rotorscheibe 7, die unter Belassung des notwendigen engen Spalts in Axialrichtung hintereinander angeordnet sind, wobei diesem Spalt das Extrudat von der nur schematisch dargestellten Schneckeneinheit 2 aus radial zugeführt wird. In diesem Fall ist die wirksame Spaltlänge praktisch durch den Radius 15 der einander gegenüberstehenden Stator- und Rotorscheibe 5 bzw. 7 bestimmt. Beiden Scheiben 5 und 7 ist gemäß besonderer Darstellung bei diesem Ausführungsbeispiel eine Heizung 16 zugeordnet, die im übrigen auch bei allen anderen Ausführungsbeispielen vorgesehen sein kann. Der Antrieb für die Rotorscheibe 7 ist auch hier wiederum nicht dargestellt und liegt an dem in Fig. 5 linksseitigen Ende der Welle 17 der Rotorscheibe 7, die über ein Lager 18 an dem an der Schneckeneinheit 2 angesetzten Gehäuse 19 gelagert und gegenüber letzterem rotationsstabil über eine Dichtung 20 gedichtet ist.

Die Statorscheibe 5 ist in einem als Fortsetzung des Gehäuses 19 zu verstehenden Gehäuse 19a gelagert und über eine weitere Abdichtung 20a dort abgedichtet angeordnet. Die zweiteilige Ausbildung der Gehäuseteile 19 und 19a dient insbesondere der konstruktiven Vereinfachung des Aufbaus des Misch- und Scherkopfs 4, und zwar nicht nur im Hinblick auf eine preiswerte Herstellbarkeit, sondern auch im Hinblick auf eine möglichst einfache Veränderbarkeit des zwischen Statorscheibe 5 und Rotorscheibe 7 gelegenen Spalts bezüglich der Länge und der Weite desselben.

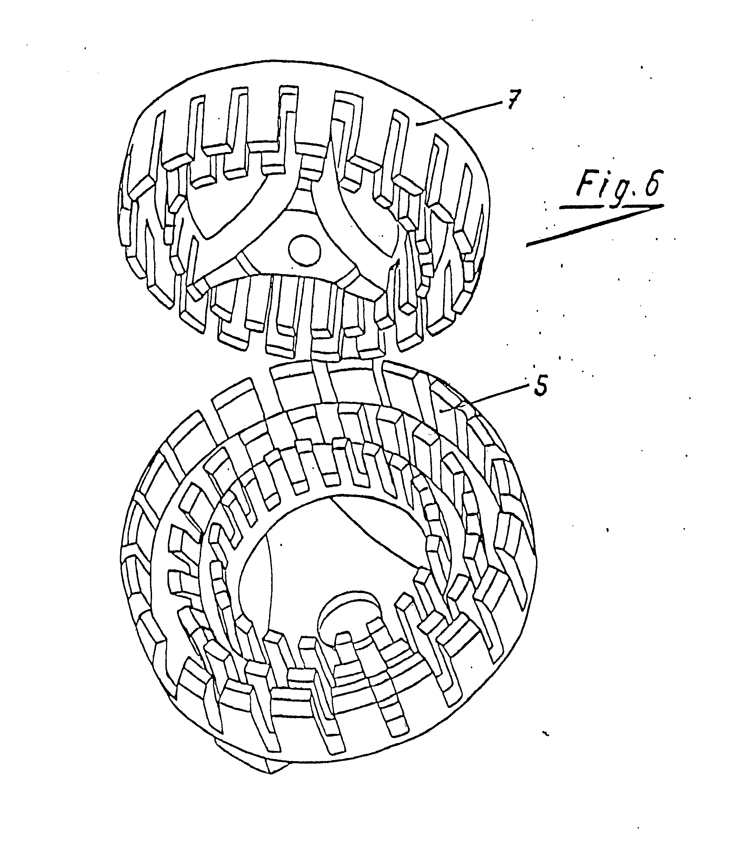

Fig. 6 zeigt nur die beiden wesentlichen Bestandteile eines weiteren Ausführungsbeispiels des Misch- und Scherkopfs 4, nämlich zwei scheibenförmige Elemente 5 und 7, die axial hintereinander liegend angeordnet sind und die in einem Fall drei zueinander konzentrische Reihen von Zapfen und im anderen Fall zwei zueinander konzentrische Reihen von Zapfen aufweisen, wobei die beiden Reihen des Bestandteils 7 bei axialer Zuordnung zu dem Bestandteil 5 zwischen den drei Reihen des Bestandteils 5 zu liegen kommen, wodurch eine sehr große Spaltlänge erreicht ist. Durch die entsprechende Numerierung der beiden Bestandteile 5 und 7 ist das Bestandteil 5 als Statorelement und das Bestandteil 7 als Rotorelement zu verstehen.

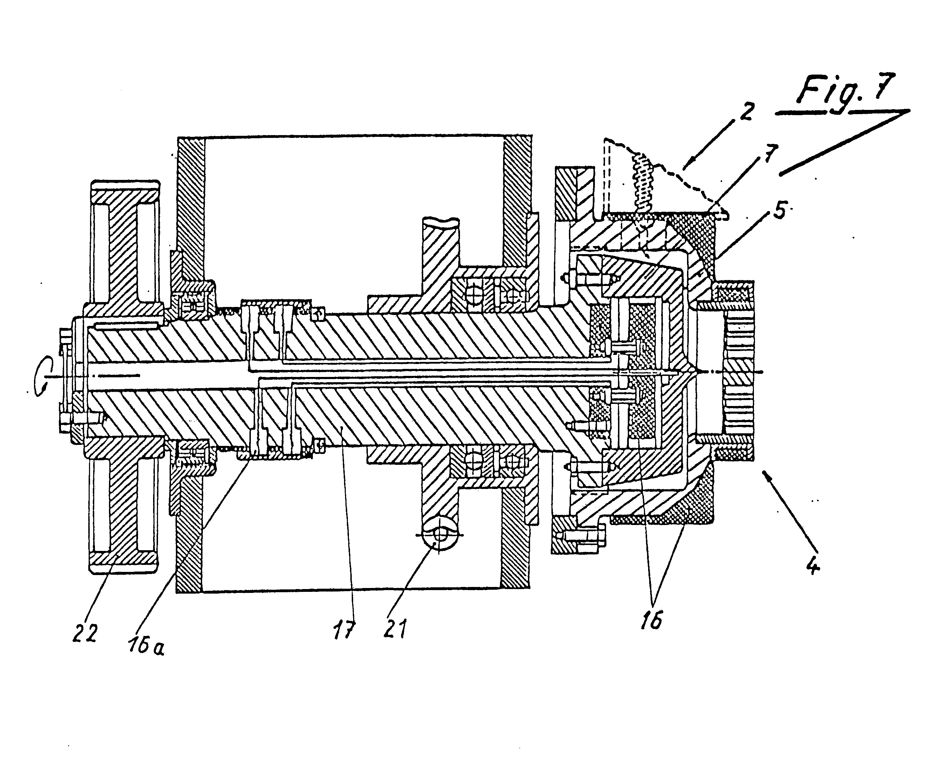

Schließlich zeigt Fig. 7 noch eine Ausführungsform des Misch- und Scherkopfs 4, diesmal bestehend im wesentlichen aus zwei in Axialrichtung aufeinander zu bzw. voneinander weg einstellbaren Elementen 5 und 7, die mit ihren beiden einander zugewandten Flächen zwischen diesen den Scherspalt bilden, der durch die genannte Bewegung der beiden Elemente 5 und 7 in seiner lichten Weite verstellbar ist. Zur Verstellung der lichten Weite des Spalts dient eine Verstelleinrichtung 21. Auch in diesem Fall ist für das Statorelement 5 und das Rotorelement 7 eine Heizung 16 vorgesehen, deren Stromzuführung mit 16a bezeichnet ist. In diesem Fall ist schließlich noch am linken Ende der Welle 17 des Rotorelementes 7 ein Antriebsrad 22 dargestellt, über das das Rotorelement 7 gegenüber dem Statorelement 5 in Rotation versetzbar ist.

Unter langsam laufenden Schnecken werden solche mit weniger als 50 Upm, vorzugsweise solche zwischen 10 und 20 Upm verstanden, im Gegensatz zu herkömmlichen Anlagen, deren Schnecken mit 100 bis 600 Upm oder sogar mehr in Umlauf stehen.

Rotor und Stator können also beispielsweise einerseits aus einer Schnecke mit zugehörigem Gehäuse, andererseits aber auch so ausgebildet sein, daß der Stator aus einer feststehenden oder entgegengesetzt drehenden, ebenen oder kegeligen Scheibe besteht, während der Rotor eine passende ebene oder konische Form annimmt, jedoch immer so, daß zwischen beiden Teilen mindestens ein verhältnismäßig enger Spalt entsteht, durch den das Extrudat vor Eintritt in die Düse hindurch muß. Rotor und Stator können jedoch auch beliebig andere Formen wie gegeneinander laufende Zahnkränze haben, die eng zueinander stehen, sich aber nicht berühren dürfen. Sinn dieser Anordnung ist also, das aus dem Extruder austretende, normalerweise bereits auf über 100° C aufgeheizte und plastizierte Material einer zusätzlichen Mischung und Scherung zu unterwerfen, bevor es aus der Düse austritt. Bei entsprechender Auslegung des Misch- und Scherkopfs und genügender Antriebsleistung braucht jedoch trotz engem Spalt kein Druckabfall in dem System Stator/Rotor aufzutreten, im Gegenteil, es kann eine Druckerhöhung aufgebaut werden.

Im folgenden sind einige Ausführungs- bzw. Anwendungsbeispiele der Erfindung näher beschrieben:

### Beispiel 1

In einem Textruder TWIN 1180 der Anmelderin, ausgelegt mit einem 14-kW-Kommutatormotor und einstellbaren Schneckendrehzahlen von 5—18,5 Upm, mit beheizbarem Zylinder, beheizbaren gegenläufigen, konischen Doppelschnekken, wurden 50 kg Roggenmehl mit einer Feuchtigkeit von 13%, sowie zusätzlich eingemischt 1% Salz und Aromastoffe, zugegeben. Aus der Düse, mit einem Austrittsspalt von 80 × 1,5 mm Querschnitt wurden 180 kg/h eines kontinuierlich austretenden, ausgebackenen, wohlschmeckenden knäckebrotähnlichen Produktes extrudiert, wobei dem Motor 12 kW bei 6 Upm an Leistung abverlangt wurden. Der Motor war bei diesen niedrigen Drehzahlen und hoher abverlangter Leistung um mehr als 100% überlastet. An diese Maschine wurde ein Misch- und Scherkopf angeschlossen in der Ausführung wie etwa in Fig. 2 dargestellt, wobei der Rotor durch einen 20 kW Gleichstrommotor angetrieben wurde. Der Rotor mit 100 mm ∅ und 200 mm lang konnte von 0 bis auf 250 Upm geregelt werden. Die gleiche Düse wie oben wurde an den Scher- und Mischkopf angeschlossen. Unter sonst gleichen Bedingungen wurde ein Knäckebrot extrudiert, mit zarterem Biß, wobei die Leistung auf 300 kg/h stieg, bei folgenden Einstellwerten: Textruder Schneckendrehzahl 15 Upm bei 12 kW, Scher- und Mischkopf 15 kW—180 Upm. Diese Produktion konnte im Dauerbetrieb gefahren werden bei gleichbleibender Produktionsqualität.

### Beispiel 2

Der gleichen Textrudermaschine wie oben (ohne Misch- und Scherkopf) wurde bei sonst gleichen Bedingungen eine Mischung aus reinem Weizenmehl, Type 405, mit 14% Feuchtigkeit zugeführt. Beim Austritt des Materials aus der Formgebungsdüse stieg der Rückdruck der Doppelschnecken, d. h. die Kompression im Extruderzylinder, so stark an, daß die Leistung des Antriebsmotors kurzfristig enorme Werte annahm und der Motorschutz ansprach und den Motor abschaltete. Auch bei Versuchen mit einer Feuchtigkeit von 15% war keine Verarbeitung erreichbar. Beginnend mit einer Feuchtigkeit von 18% konnte ein teilverkleistertes, zähes, nichteßbares, kaum expandiertes Band extrudiert werden. Nachdem ein Scher- und Mischkopf angeschlossen worden war, waren alle Mischungen desselben Mehls mit Feuchtigkeiten beginnend von 12% bis 17% zu extrem leichten, porösen, expandierten und wohlschmeckenden Produkten extrudierbar, die sogar um so besser schmeckten, je niedriger die Feuchtigkeit der Weizenmehlmischung war.

Bei der Verarbeitung gemäß Beispiel 1 und 2 findet im Augenblick des Austritts des Verarbeitungsguts aus der hinter dem Misch- und Scherkopf angeordneten Formgebungsdüse eine adiabate Expansion des Verarbeitungsguts zum fertigen texturierten, d. h. porös »ausgebackenen« Nahrungsmittel statt, beispielsweise bei Durchtritt durch eine Schlitzdüse zu Knäckebrot oder bei Durchtritt durch eine Lochdüse mit nachgeschaltetem Rotationsmesser zu »popcorn«-artig aussehenden Expansionsprodukten.

### Beispiel 3

Dem in Beispiel 1 und 2 beschriebenen Textruder wurden 50 kg Casein zugeführt, wobei diesem Rohstoff in einem Mischer eine genügende Menge Natriumhydroxyd in Form von konzentrierter Lauge zugeführt worden war. Die Lauge reagierte im Mischer mit dem Casein und bildete kleinere Klumpen, die sich im Mischer schlecht oder nicht zerschlagen ließen. Diese also sehr »schlechte« Mischung wurde über den Textruder aufgeheizt und über 2 × 5 mm ∅ Düsen zu ca. 15 mm ∅ Strängen expandiert. Diese Stränge mit einer festen und porösen Struktur wurden zermahlen, um festzustellen, ob das sich ergebende Caseinat qualitativ interessant wäre. Dabei wurde festgestellt, daß nicht alle extrudierten Bestandteile ein lösliches Natrium-Caseinat gebildet hatten. Es wurden Casein und Natriumhydroxyd-Anteile gefunden, die nicht miteinander reagiert hatten. Also einwandfrei ein Zeichen einer schlechten, inhomogenen Mischung. Nach Zuschalten des beschriebenen Misch- und Scherkopfs verbunden mit der gleichen 2 × 5 mm ∅ Düse, ergab sich ein feinporiges, expandiertes Produkt, welches sich nach Vermahlen als Pulver sehr schnell in Wasser lösen ließ, wobei bei gleichem ursprünglichem Natriumhydroxyd-Anteil keine Spuren von unlöslichem Casein oder Laugenanteil gefunden wurden. Es hatte eine 100%ige Reaktion zu Natriumcaseinat stattgefunden, also Beweis einer absoluten Homogenisierung aller Bestandteile.

### Beispiel 4

Es besteht die Möglichkeit, reinen Zucker, bzw. Saccharose mit beispielsweise 3%—5% Wassergehalt in den Extruder einzugeben und dort zu verarbeiten unter Aufheizung, bei Weitergabe in den Misch- bzw. Scherkopf muß infolge der Aufheizung entstehender Dampf abgegeben werden (= Entgasung) und zwar zur Abführung von etwa 2% bis 4% Wasser. Das schließlich aus der Formgebungsdüse austretende Gut ist nach Abkühlung ein nicht-expandierter fester Karamel bzw. fester Bonbon ohne Rekristallisationstendenz.

Nur zur Vermeidung von Mißverständnissen wird ergänzend darauf hingewiesen, daß insbesondere in Hinblick auf die Einhaltung bestimmter Verfahrensbedingungen sowohl der Zylinder als auch die Doppelschnecken heizbar bzw. kühlbar sein können, was im übrigen natürlich auch für den Misch- und Scherkopf gilt.

**Patentansprüche**

1. Verfahren zur Verarbeitung von trockenen stärke-, protein-, zucker- und fetthaltigen Substanzen in Pulver- bzw. Mehlform auf Doppelschneckenextrudern mit gegensinnig laufenden und ineinander kämmenden Schnecken konischer oder paralleler Gestaltung zu Lebens- und Futtermitteln in verzehrgerechter Form, dadurch gekennzeichnet, daß das Verarbeitungsgut mit einer Anfangsfeuchtigkeit von 10% bis 20%, vorzugsweise 12% bis 16%, bei Mehlmischungen, von 13% bis 20% bei Verarbeitungsgütern mit hohem Eiweißgehalt und von weniger als 12%, vorzugsweise von höchstens 10% und noch weiter bevorzugt von höchstens 2% bis 5%, bei zuckerhaltigem oder sogar vollständig aus Zukker bestehendem Verarbeitungsgut in den Extruder eingespeist wird, daß das Verarbeitungsgut mit höchstens 100°C in den Extruder eingespeist wird, daß das Verarbeitungsgut während des Durchlaufs durch den Extruder auf eine Extruderaustrittstemperatur von höchstens 130°C bis 230°C aufgeheizt wird, daß das Verarbeitungsgut hinter dem Extruderausgang zunächst durch eine Misch- und Scherzone geführt wird, in der das Verarbeitungsgut einer Misch- und Scherbehandlung unter Aufbau eines auf das Verarbeitungsgut einwirkenden Drucks von mindestens 30 kg/cm² und höchstens 500 kg/cm², vorzugsweise von 200 kg/cm² bis 300 kg/cm², und unter Ausbildung einer Temperaturerhöhung im Verarbeitungsgut zwischen Anfang und Ende der Misch- und Scherzone von 10°C bis 100°C, vorzugsweise von 50°C, unterzogen wird, daß die Extruderdoppelschnecken nur weiterfördernd auf das Verarbeitungsgut ohne besondere Misch- und Scherbehandlung zur Einwirkung gebracht werden, daß das Verarbeitungsgut nach Durchlauf durch die Misch- und Scherzone durch eine Formgebungsdüse hindurchgeführt wird und daß die Verweilzeit des Verarbeitungsgutes im Doppelschneckenextruder und in der Misch- und Scherzone zusammen zwischen 15 s und 60 s liegt.

2. Verfahren nach Anspruch 1, dadurch gekennzeichnet, daß gegebenenfalls zuzugebende, sich unter Wärmeeinwirkung unter Gasbildung zersetzende Substanzen erst in der Misch- und Scherzone zugegeben werden.

3. Verfahren nach Anspruch 1 oder 2, dadurch gekennzeichnet, daß in den Doppelschneckenextruder so viel Verarbeitungsgut eingespeist wird, daß dessen Schneckengänge vollständig gefüllt sind.

4. Verfahren nach Anspruch 1 bis 3, dadurch gekennzeichnet, daß die Umfangsgeschwindigkeit der Extruderdoppelschnecken auf höchstens 0,2 m/s eingestellt wird.

5. Verfahren nach einem der Ansprüche 1 bis 4, dadurch gekennzeichnet, daß zur Verarbeitung von zuckerhaltigem oder sogar vollständig aus Zucker bestehendem Verarbeitungsgut zwischen Extruder und Misch- bzw. Scherzone das Verarbeitungsgut entgast wird.

6. Doppelschneckenextruder zur Verarbeitung von trockenen stärke-, protein-, zucker- und fetthaltigen Substanzen in Pulver- bzw. Mehlform zu Lebens- und Futtermitteln in verzehrgerechter Form, und zwar mit gegensinnig und langsam laufenden und ineinander kämmenden Schnecken konischer oder paralleler Gestaltung und einer nachgeschalteten Formgebungsdüse nach Anspruch 1, dadurch gekennzeichnet, daß zwischen Extruderausgang und Formgebungsdüse (3) mindestens ein Scher- und Mischkopf (4) angeordnet ist.

7. Doppelschneckenextruder nach Anspruch 6, dadurch gekennzeichnet, daß jeder Scher- und Mischkopf (4) aus mindestens einer Kammer (6) mit einem oder mehreren darin oszillierenden, vibrierenden oder rotierenden Misch- und Scherelementen (7) besteht.

8. Doppelschneckenextruder nach Anspruch 7, dadurch gekennzeichnet, daß zwischen Misch- und Scherelement (7) und Kammergehäuse (5) mindestens ein Scherspalt besteht, durch den das Extrudat vor Eintritt in die Düse (3) hindurchgepreßt wird, wobei es einer intensiven Scherung und Homogenisierung unterworfen wird.

9. Doppelschneckenextruder nach Anspruch 8, dadurch gekennzeichnet, daß der Scherspalt von außen veränderlich einstellbar ist.

10. Doppelschneckenextruder nach Anspruch 7, dadurch gekennzeichnet, daß die Antriebsdrehzahl des rotierenden Scherelementes (7) veränderbar ist.

11. Doppelschneckenextruder nach Anspruch 6, dadurch gekennzeichnet, daß der Misch- und Scherkopf (4) heiz- bzw. kühlbar ist.

12. Doppelschneckenextruder nach Anspruch 6, dadurch gekennzeichnet, daß der Misch- und Scherkopf (4) eine Zugabemöglichkeit für in das Verarbeitungsgut einzumischende Substanzen aufweist.

**Claims**

1. Process for working up into digestible food or feed, dry powders or flours containing starch, protein, sugar and fat on twin-screw extruders with co-penetrating, counter-rotating screws of conical or parallel design.

The process is defined by the fact that the raw material is cooked with total moisture of 10% to 20% or preferably 12% to 16% in case of flour, or 13% to 20% with high protein containing mixes and with less than 12%, preferably maximum of 10% or still preferred 2% to 5% with substances containing sugar or consisting totaly of sugar to be fed into the extruder, the maximume temperature at which the raw material can be fed into the extruder being 100°C, the maximum temperature to which the raw material during transference through the extruder is heated up is maximum of 130−230°C, the process being further characterized by the extrudate being transferred from the extruder's exit into a mixing and shearing zone, in which the product is subjected to a mixing and shearing action, under a pressure of minimum 30 kg/cm$^2$ and maximum of 500 kg/cm$^2$ or preferably of 200 kg/cm$^2$ to 300 kg/cm$^2$ and under a temperatur increase in the product obtained in between entrance and exit of the mixing and shearing zone of 10°C to 100°C, preferably of 50°C. The process is further characterized by the fact that the extruder twin-screws are basically transferring and not mixing or shearing the raw material, and that the raw material is conducted through a die after transference through the mixing and shearing zone and that the residence time of the raw material through the twin-screw extruder and the mixing and shearing zone is in between 15 to 60 seconds.

2. Process according to claim 1. − defined by the fact that substances which under heat would liberate gas, are added first in the mixing and shearing zone.

3. Process according to Claim 1. or 2. − defined by the fact that the twin-screw extruder be fed with enough raw material to fill all the screw flights completely.

4. Process according to Claim 1. to 3. − defined by the fact that the peripherical speed of the extruder's twin-screws is limited to 0,2 m/second.

5. Process according to one of the Claims 1. to 4. − defined by the fact that the raw material containing sugar or totally constituted by sugar is degassed during the transistion between twin-screw extruder and mixing and shearing zone.

6. Twin-screw extruder for cooking of dry starch, protein, sugar and fat containing raw materials in the form of powder or flour, into consumable food or feed procucts with counter-rotating and slow moving co-penetrating twin-screws of conical or parallel type with subsequent form creating die, according to 1., defined by the fact that between exit of extruder an die (3) at least one shear and mixing head (4) is installed.

7. Twin-screw extruder according to 6. − defined by the fact that each shear and mixing head (4) is composed of at least one chamber (6) with one or more shear elements (7) oscillating (4), vibrating or rotating thereon.

8. Twin-screw extruder according to Claim 7. − defined by the fact that between mixing and shearing element (7) and wall chamber (5) at least one shearing gap is existing through which the extrudate has to pass before entering the die (3), so as to submit the raw material to an intense shear and mixing.

9. Twin-screw extruder according to Claim 8. − defined by the fact that the shearing gap is adjustable from outside.

10. Twin-screw extruder according to 7. − defined by the fact that the drive speed of the rotating shear element (7) is variable.

11. Twin-screw extruder according to Claim 6. − defined by the fact that the mixing and shearing-head (4) is heatable and coolable.

12. Twin-screw extruder according to Claim 6. − defined by the fact that the mixing and shearing-head (4) contains an entrance permitting to add and mix into the raw material other substances.

## Revendications

1. Procédé pour la transformation des substances en poudre ou farineuses contenant de l'amidon, de la protéine, du sucre et de la graisse avec des extrudeuses bi-vis contre-rotantes et co-penetrantes en exécution conique ou parallèle, pour la production d'alimentation humaine ou animale sous forme comestible, caractérisé par le fait que le matérial à transformer est ajouté à l'extrudeuse avec une humidité initiale de 10−20% ou preférablement de 12−16% dans le cas de matérial farineux, ou avec 13−20% d'umidité dans le cas de produits à haute teneur en protéine et moins que 12% ou maximum de 10% et encore mieux avec un maximum de 2% à 5% dans le cas de mélanges contenant du sucre ou totalement constitués par sucre, que la temperature du matériel à ajouter serait de 100°C maximum, que pendant son séjour dans l'extrudeuse la temperature maximale du produit serait de 130°C−230°C, qu'en sortant de l'extrudeuse on ferait conduire le matérial par une tête de mélange et de cisaillement en applicant ici un traitement de mélange et de cisaillement sous pression de 30 kg/cm$^2$ minimum et 500 kg/cm$^2$ maximum, mais préférablement de 200 kg/cm$^2$ à 300 kg/cm$^2$ et en produisant une augmentation de temperature entre entrée et sortie de la tête de mélange et de cisaillement de 10°C à 100°C et de préférence de 50°C, et caractérisé par le fait que les deux vis de l'extrudeuse ont seulement un effet de transport et sans une spéciale activité de mélange et de cisaillement sur le matérial à extruder, que le matérial à extruder doit passer une filière après avoir traversé la tête, de mélange et de cisaillement, et que le temps de séjour dans l'extrudeuse et dans la tête de cisaillement se trouve entre 15 à 60 secondes.

2. Procédé selon revendication 1 caractérisé par le fait que des additifs éventuellement à ajouter et qu'éventuellement se décomposent sur l'influence de la temperature s'ajoutent seulement dans la tête de mélange et de cisaillement.

3. Procédé selon revendication 1 ou 2, caractérisé par le fait qu'on ajoute dans l'extrudeuse autant de produit à transformer pour remplir compètement les chambres des vis.

4. Procédé selon revendication 1−3, caractérisé par le fait la vitesse periphérique des double-vis est ajustable à une valeur maximale de 0,2 m/seconde.

5. Procédé selon revendication 1—4, caractérisé par le fait que le matérial à extruder contitué totale ou partiellement par du sucre, est degazifié entre l'extrudeuse et la tête de mélange et de cisaillement.

6. Extrudeuse à double-vis pour la transformation des substances séches en poudre ou farineuses et contenant de l'amidon, de la protéine, du sucre et de la graisse en produits comestibles d'alimentation humaine ou animale, et ceci en utilisant des double-vis coniques ou paralèlles et avec une filtière formatrice selon revendication 1, caractérisé par le fait qu'on a placé entre la sortie de l'extrudeuse et la filière (3) au moins une tête de mélange et de cisaillement (4).

7. Extrudeuse à double-vis selon revendication 6, caractérisé par le fait que chaque tête de mélange et de cisaillement (4) est constituée au moins par une chambre (6) avec un ou plusieurs éléments de cisallement (7) y oscillant (4) vibrant ou rotant.

8. Extrudeuse à double-vis selon revendication 7, caractérisé par le fait qu'entre l'élément de mélange et de cisaillement (7) et boîte de la chambre (5) existe au moins une fente de cisaillement atravers laquelle l'extrudat est pressé avant l'entré dans la filière (3), de sorte qu'il est soummis à un cisaillement et homogénisation intense.

9. Extrudeuse à double vis selon revendication 8, caractérisé par une fente ajustable du dehors.

10. Extrudeuse selon revendication 7, caractérisé par le fait que les rotations d'accionement de l'élément rotant de cisaillement (7) sont variables.

11. Extrudeuse selon revendication 6, caractérisé par le fait que la tête de mélange et de cisaillement (4) est chauffable ou refroidissable.

12. Extrudeuse selon revendication 6, caractérisé par le fait que la tête de mélange et de cisaillement (4) a une possibilité pour introduire des autres additifs à mêler dans l'extrudat.

*Fig. 1*

0 041 641

Fig.2

*Fig. 3*

_Fig. 4_

0 041 641

Fig. 5

*Fig.6*

Fig. 7